# EUROPEAN PATENT APPLICATION

(11) **EP 0 911 537 A1**
(43) Date of publication of application: **28.04.1999**
(21) Application number: 98919515.1
(22) Date of filing: 07.05.1998
(51) Int. Cl.: F16F 15/32, H02K 15/16

(54) **ROTARY BODY CONSTRUCTION**

(30) Priority: 07.05.1997 JP 134324/97
(71) Applicant: FANUC LTD, Minamitsuru-gun, Yamanashi 401-0597 (JP)
(72) Inventor: NAKAMURA, Kosei, Shizuoka 410-1115 (JP); MASUYA, Michi Room 14-301, Fanuc Manshonharimomi, Yamanashi 401-0511 (JP); ICHIKAWA, Shinpei Fanuc Dai-3 Virakaramatsu, Yamanashi 401-0511 (JP)
(74) Representative: Billington, Lawrence Emlyn
(86) International application number: JP9802034
(87) International publication number: WO9850713

(57) **Abstract**

A rotator structure capable of reliably adjusting imbalance of the rotator structure as a whole while avoiding an adverse influence upon individual component parts thereof. Balancing rings (6) are attached to a rotor (3) to form a unit, and set screws (9) are fitted into some of tapped holes (8) cut in the balancing rings (6) to thereby adjust balancing of the unit. Since it is unnecessary to cut a large number of tapped holes in the rotor (3), mechanical strength of the rotor per se is ensured. The unit is integrally secured to a motor shaft (2) after the rotational balance thereof is adjusted; therefore, the balancing rings (6) need not be securely fixed to the rotor (3) and thus the number and depth of tapped holes (16) for connecting may be small.

## Description

### Technical Field

The present invention relates to a rotator structure, and more particularly to an improvement of a rotator structure for high speed rotation.

### Background Art

A rotator structure constituted by combining a plurality of component parts, for example, a spindle structure for a machine tool is conventionally known.

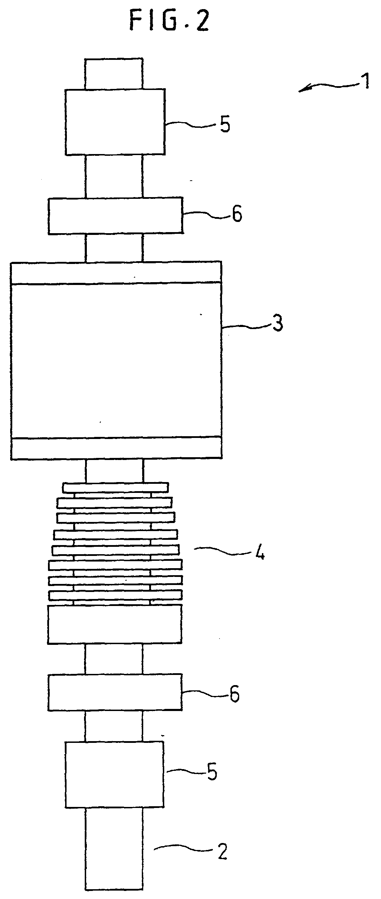

FIG. 2 schematically shows a spindle structure 1 for a machine tool. The spindle structure 1 generally comprises a motor shaft 2 to which a rotating tool is attached, a rotor 3 and radiating fins 4 integrally secured to the motor shaft 2 by shrinkage fitting, and bearings 5 (inner rings) for rotatably supporting the motor shaft 2 on a motor housing, a machining head, etc. Further, balancing rings 6 are integrally secured to the motor shaft 2 by shrinkage fitting, in order to keep the balance of the component parts 2, 3, 4 and 5 as a whole.

Namely, after the rotator structure is constructed into one-piece body, the balancing rings 6 alone are subjected to a lightening or weighting process to correct imbalance of the whole rotator structure.

The lightening or weighting process referred to herein means, for example, partly drilling or cutting the outer peripheral portion of the balancing ring 6, fitting hexagon socket set screws into some of a large number of tapped holes cut beforehand in the balancing ring 6 at an equal pitch from the outer peripheral portion inward in the diametrical direction, binding the outer peripheral portion of the balancing ring 6 partly with metal by welding, etc. All these processes are carried out in order to shift the center of gravity of the rotator structure as a whole to the axis of the motor shaft 2 and thereby prevent oscillation during high-speed rotation.

However, in cases where the number of component parts constituting the rotator structure is large, the individual component parts may be imbalanced concentratedly in a particular direction, and in such cases, even if attempts are made to correct the imbalance of the whole rotator structure by means of the balancing rings 6 alone after the rotator structure is constructed into one-piece body, the overall balance may possibly fail to be achieved by merely lightening or weighting the balancing rings 6.

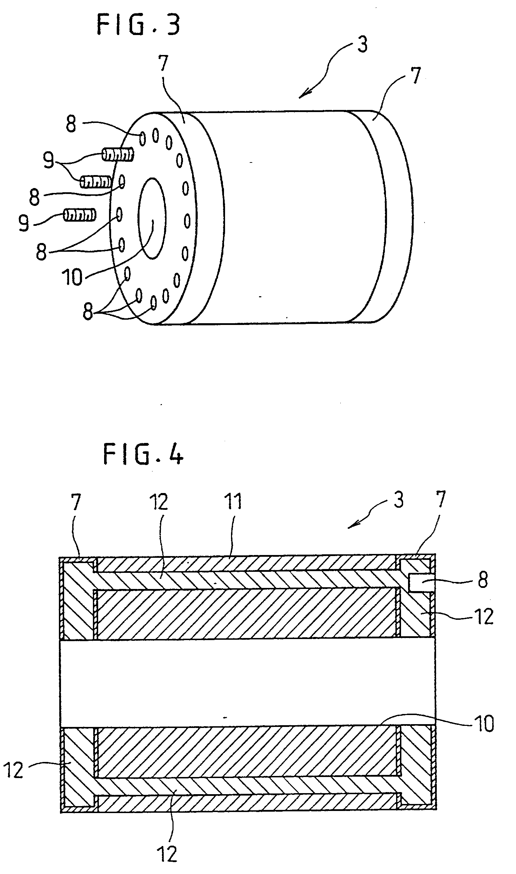

A rotator structure has therefore been proposed in which imbalances of the individual component parts are corrected before the rotator structure is constructed into a whole. FIG. 3 illustrates, by way of example, correction of imbalance of the rotor 3.

As shown in FIG. 3, correction of imbalance of the rotor 3 is performed by cutting in advance a large number of tapped holes 8 at a predetermined pitch in reinforcing rings 7 forming the opposite ends of the rotor 3, and fitting hexagon socket set screws 9 as balancers into some of the tapped holes 8 in accordance with the imbalanced state of the rotor 3.

However, as shown in FIG. 4, the rotor 3 is constituted by a rotor core 11 having a shaft hole 10 into which the motor shaft 2 (see FIG. 2) is fitted, the reinforcing rings 7 secured to both end faces of the rotor core, and an aluminum filler 12 axially extending through part of the rotor core 11 and occupying the interiors of the reinforcing rings 7, and therefore, if a large number of tapped holes 8 are cut in the reinforcing rings 7, a problem arises in that the strength of the reinforcing rings 7 per se lowers.

Also, forming a large number of tapped holes 8 means removing a large amount of the aluminum filler 12 in the reinforcing rings 7, with the result that the flow of electric current is impeded. Further, the strength of connection between the portion of the aluminum filler 12 extending through part of the rotor core 11 and the portion of same within the reinforcing rings 7 lowers due to the formation of the tapped holes 8. As a result, the connecting portion may possibly be broken during high-speed rotation, so that the reinforcing rings 7 are separated from the rotor core 11. Also, when the rotor 3 is rotated at high speed, the aluminum filler 12 occupying the interiors of the reinforcing rings 7 may possibly leak out through the tapped holes 8 due to an extremely large centrifugal force.

Imbalance may be corrected by a partial drilling or cutting method as stated above, but if this type of lightening process is performed on individual component parts, for example, the rotor 3, problems such as reduction in strength of the reinforcing rings 7, impediment to the flow of electric current, separation of the reinforcing rings 7 or leak of the aluminum filler 12 arise as in the case where the tapped holes 8 are cut in the reinforcing rings 7.

Alternatively, a method may be adopted in which the reinforcing rings 7 per se are provided in advance with a cutting allowance and the cutting allowance is cut appropriately in accordance with the imbalanced state to thereby correct imbalance. Such cutting may, however, adversely affect the rotor 3, and in any event, the rotor 3 should preferably be not directly machined.

### Disclosure of Invention

An object of the present invention is to provide a rotator structure capable of reliably correcting imbalance of the rotator structure as a whole while avoiding an adverse influence upon individual components constituting the structure.

According to one aspect of the invention, a rotator structure comprises: a shaft; a rotator; a balancing ring and an additional element to be added to the balancing ring. The balancing ring is connected to at least one axial end of the rotator to form a unit, the rotational balance of the unit is adjusted by adding the additional element to the balancing ring in accordance with a result of measurement of rotational balance of the unit. The rotator and the balancing ring of the unit having the rotational balance adjusted are fixed on the shaft with a positional relationship therebetween maintained.

According to another aspect of the invention, a rotator structure comprises: a shaft; a rotator; a balancing ring; and an additional element to be added to the balancing ring, wherein the balancing ring is connected to at least one axial end of the rotator to form a unit, the rotational balance of the unit is adjusted by removing a part of the balancing ring in accordance with a result of measurement of rotational balance of the unit, and the rotator and the balancing ring of the unit having the rotational balance adjusted are fixed on the shaft with a positional relationship therebetween maintained.

Imbalance correction of each of rotators which are the components constituting the rotator structure is performed separately, and therefore even in cases where the number of components constituting the rotator structure is large, imbalance of the rotator structure as a whole can be reliably corrected.

The unit constituted by the rotator and the balancing ring is fixed on the shaft by shrinkage fitting, and this makes it unnecessary to securely fix the balancing ring to the rotator. Accordingly, in the case where screws are used to fix the balancing ring to the rotator, the number of tapped holes in the rotator may be small and the depth of the tapped holes may also be small; and therefore the machining to be performed on the rotator itself only causes a very slight reduction in strength.

Also, after the rotator and the balancing ring are fixed together to form the unit, the inner peripheral surfaces of the shaft holes are finished, and thus the center of the shaft hole of the rotator can be aligned with that of the shaft hole of the balancing ring without fail. Specifically, when a strong axis aligning effect acts upon each of the rotator and the balancing ring during the shrinkage fitting of the rotator and the balancing ring on the shaft, the connecting portion between the rotator and the balancing ring is subjected to no internal stress which may otherwise be caused due to misalignment of the centers of these elements, whereby deformation of the rotator or the balancing ring, etc., can be prevented.

Further, since the influence of post-machining on the rotator per se is small, the structure of the present invention is especially useful in adjusting the balance of a rotator having a complicated internal structure, for example, a rotor of a motor.

### Brief Description of Drawings

FIG.1 is a view showing a motor rotor to which a rotator structure according to one embodiment of the present invention is applied;
FIG. 2 is a conceptual diagram schematically showing a spindle structure of a machine tool;
FIG. 3 is a view of a rotor, illustrating an example of individual imbalance correction; and
FIG. 4 is a sectional view showing the internal structure of the rotor shown in FIG. 3.

### Best Mode of Carrying out the Invention

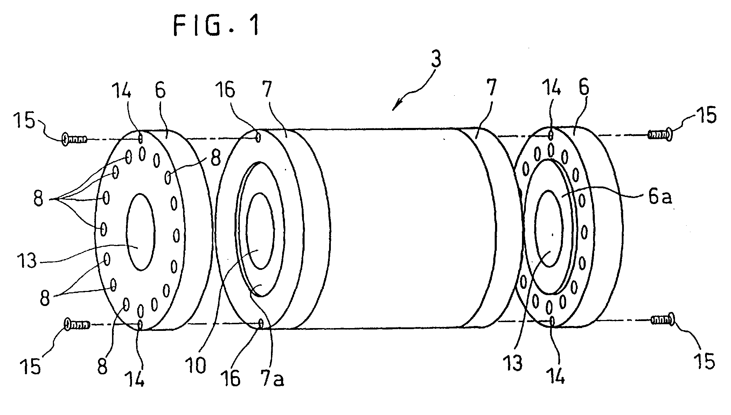

Referring to FIG. 1, a rotator structure according to one embodiment of the present invention, which is applied to a motor rotor, will be described. A rotor 3 has an overall structure similar to that of the conventional rotor shown in FIGS. 3 and 4, but the embodiment shown in FIG. 1 does not have the tapped holes 8 formed in reinforcing rings 7 at opposite ends of the rotor 3.

Balancing rings 6 are each finished so as to have a diameter equal to that of the reinforcing rings 7 of the rotor 3, and a shaft hole 13 corresponding to a shaft hole 10 in the rotor 3 is cut through the central portion of each balancing ring. The shaft holes 10 and 13 are formed such that a finished dimension (diameter) thereof is somewhat smaller than that of a motor shaft 2 (see FIG. 2), which is a single body, taking account of interference for shrinkage fitting. In cases where the inner peripheral surfaces of the shaft holes 10 and 13 are finished at the same time after the balancing rings 6 and the rotor 3 are combined into a one-piece body, the diameter of the shaft holes is made even smaller taking account of interference for shrinkage fitting as well as finishing allowance. In this embodiment, since the inner peripheral surfaces of the shaft holes 10 and 13 are finished at the same time after the balancing rings 6 and the rotor 3 are combined into a one-piece body, the amount by which the diameter of the shaft holes is to be reduced needs to be determined taking account of interference for shrinkage fitting and finishing allowance.

A circumferential groove-like engaging recess 7a is formed in the outer end face of each reinforcing ring 7 concentrically with the shaft hole 10, and a disk-like engaging protuberance 6a is formed on the inner end face of each balancing ring 6 concentrically with the shaft hole 13. The engaging recesses 7a are engaged with the respective engaging protuberances 6a, whereby the outer peripheral surface of the rotor 3 (outer peripheral surfaces of the reinforcing rings 7) and the outer peripheral surfaces of the balancing rings 6 are accurately positioned with reliability.

Each balancing ring 6 also has a large number of axial tapped holes 8 opening in outer peripheral portions of the end faces thereof and arranged equidistantly in the circumferential direction, so that hexagon socket set screws 9 as balancers (see FIG. 3) may be fitted into suitable ones of the tapped holes 8.

The balancing rings 6 are fixed to the rotor 3 by first fitting screws 15 into respective screw holes 14 which open in the outermost peripheral portions of the end faces of the balancing rings 6 and arranged equidistantly in the circumferential direction, and then tightly fitting the screws 15 into respective tapped holes 16 which are cut in the reinforcing rings 7 of the rotor 3 at corresponding locations.

The screws 15 are used not to integrally couple the balancing rings 6 and the rotor 3 together for high-speed rotation, but to temporarily couple the rotor 3 and the balancing rings 6 so that they may not be displaced from each other, in order to permit the inner peripheral surfaces of the shaft holes 10 and 13 to be finished at the same time, and also to permit balance measurement of the combined structure as a whole. Thus, these component parts need not be firmly secured to each other.

Accordingly, the diameter and length of the screws 15 and the diameter and depth of the tapped holes 16 need not be very large, and the screws 15 and the tapped holes 16 used may also be small in number (in the example shown in FIG. 1, two screws are fitted into respective two tapped holes arranged equidistantly in the circumferential direction). Consequently, adverse influence of post-machining on the rotor 3, for example, reduction in the mechanical strength due to the formation of the tapped holes 16, etc., can be minimized.

The screws 15 may be removed (as described later) after the rotor 3 and the balancing rings 6 are fitted on the single-body motor shaft 2 (see FIG. 2) by shrinkage fitting. Where the screws 15 are to be left attached even after the rotor 3 and the balancing rings 6 are fitted on the motor shaft 2 by shrinkage fitting, the screws 15 are securely fitted into the tapped holes 16 at this stage by using a screw-fixing adhesive (locktight, etc.) so that the screws 15 may not become loose or detached during high-speed rotation.

The rotor 3 and the balancing rings 6 can of course be directly coupled together by an adhesive, instead of using the screws 15, the screw holes 14 and the tapped holes 16. The use of the screws 15 and the tapped holes 16 is, however, preferred in consideration of axial mounting accuracy and adhesion of the balancing rings 6 with respect to the rotor 3, deterioration of the adhesive due to heat applied during the shrinkage fitting, etc.

After the rotor 3 and the balancing rings 6 are combined into a one-piece body in the above-described manner, the inner peripheral surfaces of the shaft holes 10 and 13 are finished at the same time, followed by balance measurement of the rotor 3 to which the balancing rings 6 are integrally coupled.

To locate the center of gravity of the combined structure on the axis of the shaft holes 10 and 13, hexagon socket set screws 9 as balancers are fitted into suitable ones of the tapped holes 8 in the balancing rings 6, thereby correcting the imbalance of the rotor 3 only, which is a component part of the rotator structure. Naturally, in this case, a screw-fixing adhesive or the like is used to prevent detachment of the hexagon socket set screws 9 during high-speed rotation.

Finally, the rotor 3 to which the balancing rings 6 are integrally coupled is heated or the single-body motor shaft 2 (see FIG. 2) is cooled by liquid nitrogen etc., and the rotor 3 is loosely fitted on a predetermined position of the motor shaft 2. As the temperature of the rotor or of the motor shaft returns to ordinary temperature, the rotor 3 and the balancing rings 6 become securely fixed on the motor shaft 2 due to reduction in diameter of the hole in the rotor 3 or increase in diameter of the motor shaft 2.

At this stage, the screws 15 may be detached as stated above. Since the screws 15 are arranged equidistantly in the circumferential direction of the balancing rings 6 (in the example of FIG. 1, two screws are arranged at a pitch of 180°), the balance of the rotor 3 is never lost even if the screws 15 are detached.

Also, reduction in diameter of the shaft holes 10 and 13 occurring when the temperature of the heated rotor 3 and balancing rings 6 returns to ordinary temperature or increase in diameter of the motor shaft 2 occurring when the temperature of the cooled motor shaft 2 returns to ordinary temperature provides an axis alignment effect, whereby the centers of the shaft hole 10 and the motor shaft 2 are aligned with each other and also the centers of the shaft hole 13 and the motor shaft 2 are aligned with each other.

If, in this case, the center of the shaft hole 10 in the rotor 3 is misaligned with that of the shaft holes 13 in the balancing rings 6, the alignment effect on the rotor 3 disagrees with that on the balancing rings 6, and thus the connecting portions where the balancing rings 6 are connected to the rotor 3 by the screws or the engaging recesses and protuberances are subjected to large internal stress, causing deformation of the rotor 3 or the balancing rings 6, etc. However, in this embodiment, since the inner peripheral surfaces of the shaft holes 10 and 13 are finished at the same time, the center of the shaft hole 10 in the rotor 3 is perfectly in alignment with that of the shaft holes 13 in the balancing rings 6, and therefore, the above problem does not arise.

The foregoing is a description of the process for constructing the whole rotator structure after correcting imbalances of individual component parts, wherein the rotor 3, among the component parts constituting the spindle structure 1 as a rotator structure, was taken as an example. Imbalances of the other component parts, for example, the radiating fins 4, can also be corrected individually by a similar process. Specifically, balancing rings each having a shape similar to that of the balancing rings 6 shown in FIG. 1 and having diameters equal to those of respective axial end faces of the radiating fins 4 as shown in FIG. 2 are prepared, and are fixed to the radiating fins by the method explained above with reference to FIG. 1. After correcting imbalances of the radiating fins 4 to which the balancing rings are fixed, the radiating fins are securely fitted by shrinkage fitting on the motor shaft 2 to which the rotor 3 is already attached.

In the example shown in FIG. 1, the balancing rings 6 may be partially cut (lightened) to correct the imbalanced state, instead of correcting the imbalance of the rotor 3 by fitting hexagon socket set screws 9 into suitable ones of a large number of tapped holes 8 arranged equidistantly in the circumferential direction of the balancing rings 6. Naturally, in this case, it is unnecessary to cut the tapped holes 8 in the balancing rings 6 (no hexagon socket set screws 9 are used).

The spindle structure 1 is constructed in this manner, and since imbalances of the individual component parts have already been corrected, the spindle structure 1 as a whole, which is constructed by coupling the component parts into a one-piece body, is naturally well-balanced on the center of the motor shaft 2 which is a center of rotation.

In order to mount the balancing rings 6 to the individual component parts constituting the rotator structure, only a slight post-machining operation that does not cause any substantial reduction in the mechanical strength etc. is required (in the example of FIG. 1, only two tapped holes 16 with a small depth and diameter need to be formed), making it possible to reliably maintain the strength of the individual component parts and of the whole rotator structure.

Further, the object to which the hexagon socket set screws 9 are fitted or which is subjected to cutting for the correction of imbalance is not the rotor 3 itself or the radiating fins 4 themselves but the balancing rings 6 attached to such component parts. Accordingly, even in cases where the rotor 3 or the radiating fins 4 have end faces complicated in shape or have a complicated internal structure and thus it is not easy to cut a large number of tapped holes in such component parts, or where it is difficult to subject such component parts to a post-machining operation such as cutting, imbalance can be advantageously corrected with ease insofar as the balancing rings 6 can be attached to the component parts.

According to the present invention, the balancing rings attached to the individual component parts constituting the rotator structure are adjusted to thereby correct imbalances of the individual component parts, and therefore, even if the component parts constituting the rotator structure are large in number, imbalance of the rotator structure as a whole can be corrected without fail.

Also, since each rotator and its balancing rings are finally integrally secured to a shaft such as a motor shaft by shrinkage fitting, it is unnecessary to securely fix the rotator and the balancing rings to each other. Accordingly, even in cases where screws are used to fix the balancing rings to the rotator, the number of tapped holes or the like formed in the rotator as a component part may be small and also the depth of such tapped holes may be small, so that the strength of the rotator is scarcely reduced by a post-machining operation such as hole cutting, tapping, etc.

## Claims

1. A rotator structure comprising: a shaft; a rotator; a balancing ring; and an additional element to be added to said balancing ring,
wherein said balancing ring is connected to at least one axial end of said rotator to form a unit, a rotational balance of said unit is adjusted by adding said additional element to said balancing ring in accordance with a result of measurement of the rotational balance of said unit, and said rotator and said balancing ring of said unit having the rotational balance adjusted are fixed on said shaft with a positional relationship therebetween maintained.

2. A rotator structure according to claim 1, wherein said rotator has tapped holes for connection and said balancing ring is connected to said rotator by threaded engagement of screws and said tapped holes, to thereby form said unit.

3. A rotator structure according to claim 2, wherein said screws are detached after said unit is fixed on said shaft.

4. A rotator structure according to claim 1, wherein said balancing ring has a plurality of balancing tapped holes arranged equidistantly along an outer peripheral surface thereof, and said additional element comprises a set screw to be fitted in a balancing tapped hole selected from said plurality of balancing tapped holes in accordance with the result of the measurement.

5. A rotator structure according to claim 1, wherein said rotator and said balancing ring have axially communicating through holes formed therein when said unit is formed, and inner peripheral surfaces of the through holes are finished before the measurement of the rotational balance of said unit.

6. A rotator structure according to claim 1, wherein said unit is fixed on said shaft by shrinkage fitting.

7. A rotator structure according to claim 1, wherein said rotator comprises a rotor of a motor.

8. A rotator structure comprising: a shaft; a rotator; a balancing ring; and an additional element to be added to said balancing ring,
wherein said balancing ring is connected to at least one axial end of said rotator to form a unit, the rotational balance of said unit is adjusted by removing a part of said balancing ring in accordance with a result of measurement of rotational balance of said unit, and said rotator and said balancing ring of said unit having the rotational balance adjusted are fixed on said shaft with a positional relationship therebetween maintained.

9. A rotator structure according to claim 8, wherein said rotator has tapped holes for connection, and said balancing ring is connected to said rotator by threaded engagement of screws and the tapped holes, to thereby form said unit.

10. A rotator structure according to claim 9, wherein the screws are detached after said unit is fixed on said shaft.

11. A rotator structure according to claim 8, wherein said rotator and said balancing ring have axially communicating through holes formed therein when said unit is formed, and inner peripheral surfaces of the through holes are finished before the measurement of the rotational balance of said unit.

12. A rotator structure according to claim 8, wherein said unit is fixed on said shaft by shrinkage fitting.

13. A rotator structure according to claim 8, wherein said rotator comprises a rotor of a motor.
